# DEMANDE DE BREVET EUROPEEN

(11) **EP 1 672 275 A1**
(43) Date de publication de la demande: **21.06.2006**
(21) Numéro de dépôt: 05292753.0
(22) Date de dépôt: 15.12.2005
(51) Int. Cl.: F21V 17/00, B29C 65/16, B29C 65/48

(54) **Dispositif d'éclairage et/ou de signalisation pour véhicule automobile**

(30) Priorité: 17.12.2004 FR 0413525
(71) Demandeur: VALEO VISION, 93012 Bobigny Cédex (FR)
(72) Inventeur: Bouteiller, Jacques, 49250 Saint Mathurin (FR); Puente, Jean-Claude, 93190 Livry Gargan (FR); Levilain, Alain, 95170 Deuil La Barre (FR)
(74) Mandataire: Renous Chan, Véronique

(57) **Abrégé**

L'invention a pour objet un procédé de fixation d'une glace (1) au boîtier d'un dispositif d'éclairage et/ou de signalisation d'un véhicule automobile, le boîtier étant muni dans la zone de jonction avec la glace d'une gorge de collage (4), procédé au cours duquel
- on vient disposer de la colle (6) non totalement durcie dans ladite gorge (4),
- on vient insérer le pied de glace (2) dans la gorge de façon à ce qu'il soit recouvert de colle sur une hauteur suffisante,
- la colle durcit notamment pour assurer la fixation du pied de glace (2) dans la gorge de collage (4)

On prévoit, après l'insertion du pied de glace (2) dans la gorge de collage (4) et avant durcissement éventuel de la colle (6), au moins une étape de fixation provisoire de la glace (1) au boîtier.

## Description

L'invention est relative à un dispositif d'éclairage et/ou de signalisation pour véhicule automobile, du type feu ou projecteur. De façon connue en soi, ce type de dispositif comprend un certain nombre d'éléments à fonction optique, comme des sources lumineuses, des composants dioptriques du type lentilles, des écrans, des masques, des réflecteurs, des éléments de connexion électrique... Ces composants sont disposés dans un boîtier, qui est fermé par une glace, munie ou non de stries, qui est en verre, ou, plus couramment désormais, à base de matériau polymère du type polycarbonate ou poly méthacrylate de méthyle.

L'invention s'intéresse plus particulièrement au mode de fixation de la glace au boîtier. Il est connu de prévoir, le long du bord du boîtier où la glace doit être fixée, ce qu'on appelle une gorge de collage, qui définie une gouttière destinée à recevoir une colle dite structurale, c'est-à-dire une colle qui a une double propriété : la propriété d'assurer l'étanchéité du dispositif à l'eau sous toutes ses formes, et la propriété de solidariser efficacement la glace au boîtier. Ce type de colle est déposé dans la gorge sous forme d'une pâte de viscosité appropriée, et on vient ensuite disposer le bord de la glace dans la gorge, de façon à ce qu'il soit entièrement recouvert par la colle sur son chant et ses deux faces, sur une hauteur suffisante. La colle a ensuite quelques minutes pour durcir. et fixer définitivement la glace.

Or ce laps de temps, entre le moment où on dispose la glace dans la gorge de collage et celui où la colle a durci, est une période délicate : en effet, il faut que la glace soit initialement correctement positionnée dans la gorge, et qu'elle garde son positionnement correct jusqu'au durcissement de la colle. Pour cela, on peut avoir recours à des moyens d'appui et de positionnement prévus sur le boîtier et/ou sur la glace : par exemple on prévoit au niveau du pied de glace (le « pied » de glace étant la zone de la glace destinée à être fixée au boîtier) une zone protubérante venant coopérer avec un des bords de la gorge de collage du boîtier. Il s'est avéré que ce type de moyens pouvait se révéler insuffisant.

Il est connu du brevet US 6 478 451 un mode de fixation de la glace au boîtier, où il n'y a pas de gorge de collage sur le boîtier : on adapte la forme, par exemple en biseau ou en pointe à deux pans, du chant de la glace à celle, complémentaire, du bord du boîtier auquel la glace doit être fixée. Puis on vient souder par rayonnement laser le chant de la glace avec le bord du boîtier en exerçant simultanément une pression mécanique entre glace et boîtier dans la zone de jonction des deux pièces. Toutefois, cette technique n'est pas dénuée d'inconvénients : elle nécessite de traiter au laser toute la périphérie du boîtier si on veut assurer l'étanchéité du boîtier, ce qui peut être long. Elle requiert en outre une bonne compatibilité chimique entre la glace et le boîtier, et des moyens de presse mécanique à positionner précisément. Il n'est pas sûr qu'on puisse ainsi s'assurer, après traitement, d'une étanchéité parfaite au niveau de la jonction glace/boîtier, même si la fixation mécanique est assurée.

L'invention a alors pour but un nouveau mode de fixation de la glace sur le boîtier d'un dispositif d'éclairage et/ou de signalisation pour véhicule, qui soit meilleur, et qui soit notamment plus fiable que dans les solutions techniques connues, qui garantisse notamment un meilleur positionnement de la glace lors du collage à proprement dit, et/ou qui simplifie l'opération de fixation ou la conception des éléments à coller.

L'invention a pour objet un procédé de fixation d'une glace au boîtier d'un dispositif d'éclairage et/ou de signalisation d'un véhicule automobile, le boîtier étant muni dans la zone de jonction avec la glace d'une gorge de collage, procédé au cours duquel
- on vient disposer de la colle non totalement durcie dans ladite gorge,
- on vient insérer le pied de glace dans la gorge de façon à ce qu'il soit recouvert de colle sur une hauteur suffisante,
- la colle durcit , notamment pour assurer la fixation du pied de glace dans la gorge de collage
   et on prévoit, après l'insertion du pied de glace dans la gorge de collage et avant durcissement éventuel de la colle, au moins une étape de fixation provisoire de la glace au boîtier.

Au sens de l'invention, on comprend par « durcit » le fait que la colle puisse changer d'état, se modifier notamment par réticulation et/ou polymérisation du ou des polymères qu'elle contient. Plus généralement, ce terme implique que la colle puisse acquérir les caractéristiques mécaniques nécessaires à l'immobilisation complète de la glace sur le boîtier.

Il peut aussi être envisagé que cette colle n'assume pas, ou pas totalement le rôle de moyen de fixation définitive de la glace sur le boîtier, et que, notamment, il y soit suppléé au moins en partie par le traitement provisoire en question, qui, de fait, est utilisé également pour la fixation définitive des deux composants..

L'invention propose donc de prévoir un maintien en position de la glace dans le boîtier tant que la colle ne remplit pas encore son rôle de fixation, ce qui permet d'éviter tout mouvement relatif intempestif entre glace et boîtier pendant cette période de temps, qui est généralement, selon la colle choisie, de l'ordre de plusieurs minutes.

Avantageusement, l'étape de fixation provisoire utilise un traitement par rayonnement laser apte à souder localement la glace au boîtier. Ce type de traitement est efficace, et il est très flexible : les moyens de traitement par laser s'adaptent à de nombreuses formes et de nombreux types de matériaux. Dans le cas présent, la plupart des matériaux transparents (dans le visible) en polymère utilisés pour faire les glaces de projecteurs ou de feux de véhicules sont également transparents aux rayonnements émis par les lasers : on peut donc traiter si nécessaire les boîtiers « à travers » l'épaisseur de leurs glaces.

De préférence, le traitement par rayonnement laser s'effectue de façon à ce que, localement, le matériau du boîtier, au niveau ou à proximité de la gorge de collage, fonde au contact de la glace. Soit les deux matériaux sont déjà en contact avant traitement, soit, de part leurs configurations respectives, ils le deviennent grâce audit traitement.

La fusion locale s'effectue par exemple sur l'un des chants et/ou l'une des faces des flancs de la gorge de collage du boîtier, dans une zone dépourvue de colle.

Le traitement laser peut s'effectuer sur le matériau du boîtier à travers la glace (car généralement transparente aux rayonnements laser, comme mentionné plus haut), notamment à travers l'épaisseur nominale de la glace ou à travers une zone d'appui du pied de glace sur un des flancs de la gorge de collage du boîtier.

De préférence, le traitement par rayonnement laser s'effectue localement sur une zone du boîtier en vis-à-vis d'une zone de la glace de formes complémentaires. Ainsi, on favorise l'adhérence mutuelle des deux matériaux.

Il peut s'agir notamment de formes complémentaires de type cavité apte à recevoir un élément protubérant de type pion, créneau apte à s'emboîter dans une échancrure, zones en ressaut aptes à s'accoler.

Avantageusement, la zone du boîtier traitée par rayonnement laser comporte un élément protubérant du type pion ou créneau disposé sur ou à proximité du chant d'un des flancs de la gorge de collage, et venant s'insérer, lors de l'insertion du pied de glace dans la gorge, dans une cavité ou échancrure ménagée dans le pied de glace.

Selon un mode de réalisation, la cavité ou l'échancrure ménagée dans le pied de glace se situe dans la zone d'appui du pied de glace sur un des flancs de la gorge de collage du boîtier.

Les zones complémentaires du boîtier et de la glace peuvent comporter un élément protubérant du boîtier du type pion ou créneau et une cavité ou échancrure ménagée dans le pied de glace, dont les dimensions et formes respectives sont choisies de façon à ce que, après fusion au moins partielle dudit élément protubérant sous l'effet du rayonnement laser puis refroidissement de ce dernier, on crée un accrochage mécanique entre ledit élément et ladite cavité. Ceci est particulièrement utile quand la compatibilité chimique entre le matériau constitutif de la glace et celui constitutif du boîtier est peu élevée, car dans ce cas, même la fusion locale du boîtier au contact de la glace peut ne pas créer d'adhésion mutuelle suffisante pour fixer la glace au boîtier. On peut ainsi choisir une cavité sur la glace de forme par exemple tronconique, associée à un pion sur le boîtier de forme cylindrique, ou toutes autres formes telles que l'élément protubérant du boîtier, une fois traité au laser, adopte une forme qui vient s'emboîter définitivement dans la cavité de la glace par un effet de contre dépouille.

L'invention concerne également le dispositif d'éclairage et/ou de signalisation obtenu par le procédé précédemment décrit. Elle concerne également un dispositif d'éclairage et/ou signalisation de véhicule automobile, du type projecteur, comportant un boîtier fermé par une glace, telle que la glace est fixée au boîtier par insertion du pied de glace dans une gorge de collage aménagée sur le boîtier dans laquelle est disposé de la colle, avec des zones de soudure locale du boîtier au pied de glace, lesdites zones étant situées sur l'un des chants et/ou ou l'une des faces l'un des flancs de la gorge de collage du boîtier. Avantageusement, la glace se trouve soudée localement au boîtier au niveau du pied de glace, notamment dans la zone d'appui du pied de glace sur un des flancs de la gorge de collage du boîtier. Les zones de soudure locale se présentent notamment sous la forme d'au moins un élément protubérant du type pion ou créneau, notamment disposé sur ou à proximité du chant d'un des flancs de la gorge de collage, inséré au moins partiellement dans une cavité ménagée dans le pied de glace.

La cavité ménagée dans le pied de glace se situe de préférence dans la zone d'appui du pied de glace sur un des flancs de la gorge de collage du boîtier. Les formes respectives de l'élément protubérant une fois soudé dans la cavité et de sa cavité créent un accrochage mécanique de la glace au boîtier.

Le pied de glace peut comporter une zone d'appui contre l'un des chants de la gorge de collage, et les zones de soudure sont localisées à l'interface zone d'appui/gorge de collage.

Selon une variante, le pied de glace est dépourvu de zone d'appui. On a alors une glace plus simple à fabriquer. Notamment dans ce cas de figure, le pied de glace peut être aminci par rapport à l'épaisseur nominale de la glace, la réduction d'épaisseur étant par exemple progressive et/ou réalisée à l'aide d'une zone intermédiaire chanfreinée.

L'invention sera décrite ci-après à l'aide d'exemples non limitatifs illustrés par les figures suivantes :
Fig.1a, 1b est une représentation d'un premier mode de réalisation d'un pied de glace dans un boîtier de projecteur traité selon l'invention
Fig.2a, 2b est une représentation d'un second mode de réalisation d'un pied de glace dans un boîtier de projecteur traité selon l'invention
Fig.3a,3b est une représentation d'un troisième mode de réalisation d'un pied de glace dans un boîtier de projecteur traité selon l'invention
Fig.4 à 7 représentent d'autres modes de réalisation de l'invention.

Toutes ces figures sont schématiques, les proportions ne sont donc pas nécessairement respectées. Les références indiquant le même composant sont reprises d'une figure à l'autre.

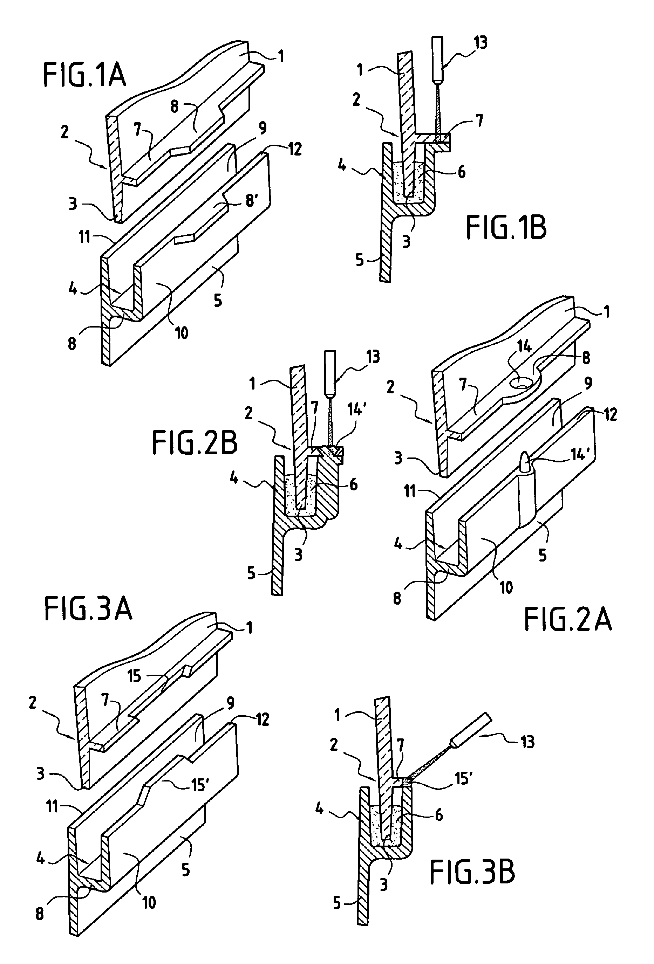

La figure 1 b est une représentation de la partie de la glace insérée dans le boîtier, la figure 1a présentant boîtier et pied de glace de façon séparée, selon une vue éclatée : la glace 1 a une zone dite pied de glace 2 qui comprend une extrémité 3 insérée dans une gorge 4 positionné tout le long du bord du boîtier 5. Cette gorge est destinée à recevoir de la colle 6, qui est visqueuse à l'état non réticulée, et qui, une fois mise dans la gorge 4, durcit par polymérisation/réticulation en 3 à 10 minutes suivant les colles. Une fois la colle 6 mise dans la gorge 4, on vient dons insérer l'extrémité 3 du pied de glace dans la gorge, de façon à ce que la dite extrémité soit enduite de colle sur plusieurs millimètres sur chacune de ses faces et sur son chant. Le pied de glace est aussi muni d'une zone 7 dite zone d'appui, qui est une zone protubérante présente sur tout le pourtour de la glace et disposée selon un plan substantiellement perpendiculaire à celui passant par l'extrémité 3 du pied de glace. Dans le contexte de l'invention, cette zone d'appui 7 est munie localement de prolongements 8 toujours selon un plan approximativement perpendiculaire au plan de l'extrémité 3. Ces prolongements 8 ont une forme substantiellement trapézoïdale, rappelant la forme d'un créneau. De manière équivalente, ils pourraient avoir une surface de type carré, rectangulaire, polygonale, ou arrondie. La gorge 4 de collage du boîtier, quant à elle, est composée d'un fond 8 et de deux flancs 9,10 ayant chacun un chant 11,12. Le flanc le plus extérieur 10 a un chant 12 sur lequel à la zone d'appui 7 de la glace peut effectivement s'appuyer et permettre le positionnement adéquat de l'extrémité du pied de glace dans la gorge. Ce chant a été en outre modifié de façon à présenter des prolongements 8' de forme et d'orientation dans l'espace identiques ou similaires à celles des prolongements 8 de la glace. De la sorte, quand la zone d'appui 7 entre en contact avec le chant 12 du flanc 10 de la gorge 4 de collage, les prolongements 8 et 8' s'accolent également, offrant une surface d'appui supplémentaire à la glace. C'est dans ces zones 8'que l'on effectue le traitement au laser 13, par un bras articulé non représenté, au travers de l'épaisseur de la zone d'appui 7 : les zones 8' fondent au moins superficiellement, et, en se refroidissant, adhèrent aux zones 8 de la glace pour assurer localement un point de fixation boîtier/glace. On prévoit au moins trois paires de zones complémentaires 8,8', le bras articulé sur lequel est monté le laser 13 se déplaçant de l'une à l'autre successivement. Alternativement, c'est l'ensemble boîtier/glace qui peut être déplacé par rapport au laser 13 qui reste fixe.

Les autres figures représentent d'autres variantes de l'invention : à la figure 2a, 2b, on a cette fois sur le flanc extérieur 12 de la gorge de collage 4 des pions 14' moulés dans la masse. Ces pions correspondent à des prolongements 8 de la zone d'appui 7 cette fois de surface plus réduite et percés d'une cavité traversante 14. Cette cavité a de préférence des parois cylindriques évasées (vers le haut), par rapport au pion 14' venant s'insérer (par le bas) dans ladite cavité. « Haut » et « bas » sont bien sur des conventions pour clarifier la compréhension de l'invention. Là encore, le traitement laser vient fondre au moins partiellement le pion du boîtier, qui vient adhérer/ s'effondrer contre les parois de la cavité avant de se solidifier. Une fois solidifié, le pion ; dont les parois viennent au moins partiellement épouser les parois de la cavité 14, se trouve pris au piège mécaniquement dans ladite cavité : on a un accrochage mécanique entre les deux éléments qui vient compléter ou suppléer l'accrochage par adhérence entre pion et cavité.

A la figure 3, on a représenté une autre variante encore : cette fois, la zone d'appui 7 n'a pas de prolongements, mais des échancrures 15, dans lesquelles peuvent venir s'emboîter sensiblement perpendiculairement des prolongements 15' du chant 12 dans le plan du flanc 10, de forme de type créneau. On vient traiter par laser ces créneaux 15' sans même avoir à traverser une épaisseur de glace dans ce cas de figure. Les créneaux, sous l'effet du rayonnement laser, tendent à s'effondre par fusion au moins partielle, et, de fait, à venir adopter les contours des échancrures 15, dont les parois sont évasées vers le haut (les créneaux ayant de préférence une surface de forme trapézoïdale ou pseudo trapézoïdale.) Comme dans le cas précédent, on a alors une sorte d'accrochage mécanique entre échancrure et créneau, une fois le créneau solidifié.

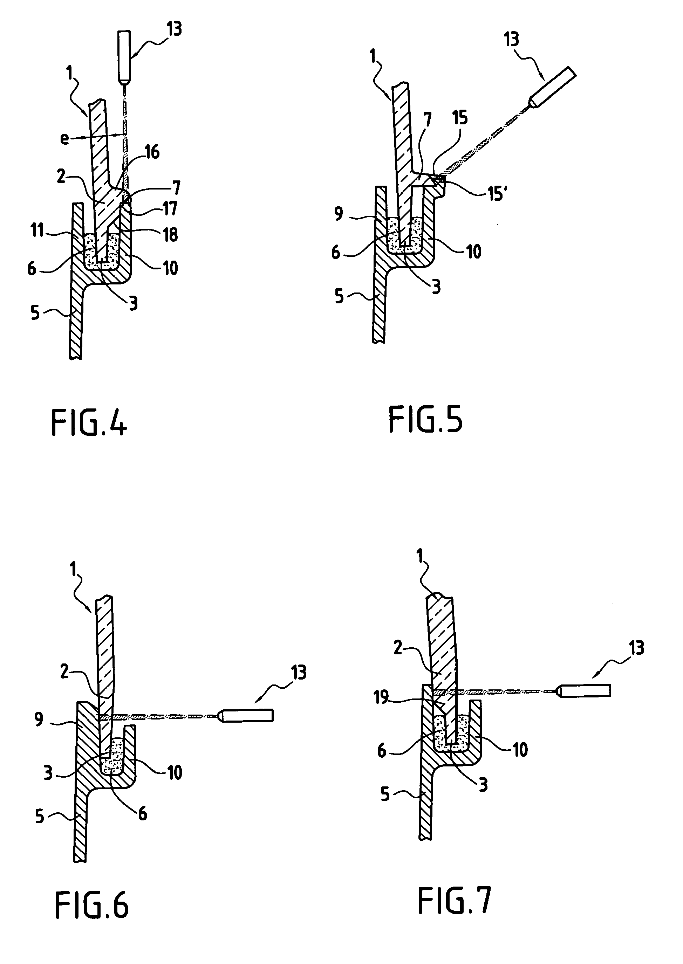

Les figures suivantes sont des variantes des exemples déjà illustrés aux figures 1 à 3 : à la figure 4, le pied de glace a une zone d'appui 7 qui a une forme particulière, avec un becquet 16 en partie haute, et un coin 17 en partie basse venant s'adapter au chant 12 et à la paroi interne du flanc externe 10 de la gorge de collage. Le pied de glace présente, en dessous de ce coin 17, une zone chanfreinée 18. L'extrémité 3 du pied de glace est amincie par rapport à l'épaisseur nominale e de la glace. On a donc ici une zone de contact de la gorge de collage avec la glace qui n'est pas limitée au chant 12, mais qui comprend aussi une partie des parois d'un des flancs de la gorge de collage.

A la figure 5, on a représenté de façon plus détaillée une association créneau /échancrure similaire à la figure 3.

A la figure 6, le pied de glace 2 n'a plus de zone d'appui. Et la zone du boîtier traitée par le laser se situe sur le flanc interne 9 de la gorge de collage, et non plus sur son flanc externe. La zone de contact glace/boîtier traitée au laser se situe donc sur la face externe du flanc interne 9 de la gorge en vis-à-vis de la face interne de l'extrémité 3 de la glace. « Interne » et « externe » sont à comprendre en fonction du positionnement du composant considéré par rapport à l'intérieur du boîtier du projecteur.

A la figure 7, on a une variante de l'exemple selon la figure 6 : on a toujours la zone de contact glace/boîtier disposée le long de la paroi externe du flanc interne 9 de la gorge, mais le pied de glace comporte une zone chanfreinée 19, qui est une zone de transition vers une extrémité amincie 3 de la glace.

On voit donc que l'invention permet de nombreuses possibilités de mise en oeuvre. On peut notamment avoir des concepts de pied de glace avec ou sans zone d'appui, amincie ou non amincie à son extrémité. On peut créer un véritable accrochage mécanique dans les zones traitées au laser, ou se contenter d'une adhérence mutuelle réalisée lors de la fusion. On peut moduler le nombre et la répartition des zones traitées sur le pourtour du boîtier, en choisissant de préférence au moins trois zones réparties régulièrement.

Dans certains des modes de réalisation représentés aux figures, on peut aussi voir que les zones d'appui, quand elles sont prévues, au niveau du pied de glace se trouvent en contact direct avec une partie de la gorge de collage. On peut noter aussi que l'invention a mis au point un système de fixation provisoire sans aucun apport de matière du type colle additionnelle: le traitement au laser modifie superficiellement le boîtier pour lui faire jouer le rôle d'agent d'adhésion.

On peut également, toujours dans le cadre de l'invention, modifier le type de colle 6 usuellement utilisée : on peut choisir de lui faire remplir essentiellement le rôle de moyen d'étanchéité, en choisissant une colle de type mastic, ou composé de silicone, et prévoir suffisamment de points de soudure entre boîtier et glace pour que ces points assurent tout ou partie de la fixation mécanique aussi bien provisoire que définitive entre boîtier et glace. On peut ainsi substituer à une colle structurale coûteuse et nécessitant un temps de durcissement par une colle de type mastic plus économique et facile de mise en oeuvre.

## Revendications

1. Procédé de fixation d'une glace (1) au boîtier d'un dispositif d'éclairage et/ou de signalisation d'un véhicule automobile, le boîtier étant muni dans la zone de jonction avec la glace d'une gorge de collage (4), procédé au cours duquel
- on vient disposer de la colle (6) non totalement durcie dans ladite gorge,
- on vient insérer le pied de glace (2) dans la gorge de façon à ce qu'il soit recouvert de colle sur une hauteur suffisante,
- la colle (6) durcit, notamment pour assurer la fixation du pied de glace (2) dans la gorge de collage (4)
**caractérisé en ce qu'**on prévoit, après l'insertion du pied de glace (2) dans la gorge de collage (4) et avant durcissement éventuel de la colle (6), au moins une étape de fixation provisoire de la glace (1) au boîtier.

2. Procédé selon la revendication 1, **caractérisé en ce que** l'étape de fixation provisoire utilise un traitement par rayonnement laser apte à souder localement la glace au boîtier.

3. Procédé selon la revendication 2, **caractérisé en ce que** le traitement par rayonnement laser s'effectue de façon à ce que, localement, le matériau du boîtier, au niveau ou à proximité de la gorge de collage (4), fond au contact de la glace (1).

4. Procédé selon l'une des revendications 2 ou 3, **caractérisé en ce que** la fusion locale s'effectue sur l'un des chants (11,12) et/ou l'une des faces des flancs 9,12) de la gorge de collage (4) du boîtier, dans une zone dépourvue de colle.

5. Procédé selon l'une des revendications 2 à 4, **caractérisé en ce que** le traitement laser s'effectue sur le matériau du boîtier à travers la glace (1), notamment à travers l'épaisseur nominale de la glace ou à travers une zone d'appui (7) du pied de glace (2) sur un des flancs (9,12) de la gorge de collage (4) du boîtier.

6. Projecteur l'une des revendications 2 à 5 **caractérisé en ce que** le traitement par rayonnement laser s'effectue localement sur une zone du boîtier en vis-à-vis d'une zone de la glace de forme complémentaire.

7. Procédé selon la revendication 6, **caractérisé en ce que** les zones respectivement du boîtier et de la glace (1) sont de formes complémentaires de type cavité apte à recevoir un élément protubérant de type pion (14,14'), créneau apte à s'emboîter dans une échancrure (15,15'), zones en ressaut aptes à s'accoler (8,8').

8. Procédé selon l'une des revendications 2 à 7, **caractérisé en ce que** la zone du boîtier traitée par rayonnement laser comporte un élément protubérant du type pion (14') ou créneau (15') disposé sur ou à proximité du chant d'un des flancs (9,12à de la gorge de collage (4), et venant s'insérer, lors de l'insertion du pied de glace dans la gorge, dans une cavité (14) ou échancrure (15) ménagée dans le pied de glace (2).

9. Procédé selon la revendication précédente, **caractérisé en ce que** la cavité (14) ou l'échancrure (15) ménagée dans le pied de glace (2) se situe dans la zone(7) d'appui du pied de glace (2) sur un des flancs (9,12) de la gorge de collage (4) du boîtier.

10. Procédé selon l'une des revendications 7 à 9, **caractérisé en ce que** les zones complémentaires du boîtier et de la glace comportent un l'élément protubérant du boîtier du type pion (14') ou créneau (15') et une cavité (14) ou échancrure (15) ménagée dans le pied de glace (2), dont les dimensions et formes respectives sont choisies de façon à ce que, après fusion au moins partielle dudit élément protubérant sous l'effet du rayonnement laser puis refroidissement de ce dernier, on crée un accrochage mécanique entre ledit élément (14,15) et ladite cavité (15,15').

11. Dispositif d'éclairage et/ou signalisation de véhicule automobile, du type projecteur, comportant un boîtier fermé par une glace (1), **caractérisé en ce que** la glace est fixée au boîtier par insertion du pied de glace (2) dans une gorge de collage (4) aménagée sur le boîtier dans laquelle est disposé de la colle (6), avec des zones de soudure locale du boîtier au pied de glace, lesdites zones étant situées sur l'un des chants (11,12) et/ou ou l'une des faces l'un des flancs (9,12) de la gorge de collage (4) du boîtier.

12. Dispositif d'éclairage et/ou signalisation de véhicule automobile selon la revendication précédente, **caractérisé en ce que** la glace (1) se trouve soudée localement au boîtier au niveau du pied de glace (2), notamment dans la zone d'appui (7) du pied de glace (2) sur un des flancs (9,12) de la gorge de collage (4) du boîtier.

13. Dispositif d'éclairage et/ou signalisation de véhicule automobile selon la revendication 11 ou la revendication 12, **caractérisé en ce que** les zones de soudure locale se présentent sous la forme d'au moins un élément protubérant du type pion (14') ou créneau (15'), notamment disposé sur ou à proximité du chant d'un des flancs (9,12) de la gorge de collage (4), inséré au moins partiellement dans une cavité (14,15) ménagée dans le pied de glace (2).

14. Dispositif d'éclairage et/ou signalisation de véhicule automobile selon la revendication précédente, **caractérisé en ce que** la cavité (14,15) ménagée dans le pied de glace (2) se situe dans la zone d'appui (7) du pied de glace (2) sur un des flancs (9,12) de la gorge de collage (4) du boîtier.

15. Dispositif d'éclairage et/ou signalisation de véhicule automobile selon la revendication 13 ou la revendication 14, **caractérisé en ce que** les formes respectives de l'élément protubérant (14',15'), une fois soudé dans la cavité, et de sa cavité (14,15) créent un accrochage mécanique de la glace (1) au boîtier.

16. Dispositif d'éclairage et/ou signalisation de véhicule automobile selon l'une des revendications 11 à 15, **caractérisé en ce que** le pied de glace (2) comporte une zone d'appui (7) contre l'un des chants (9,12) de la gorge de collage (4), et **en ce que** les zones de soudure sont localisées à l'interface zone d'appui/gorge de collage.

17. Dispositif d'éclairage et/ou signalisation de véhicule automobile selon l'une des revendications 11 à 16, **caractérisé en ce que** le pied de glace (2) est dépourvu de zone d'appui.

18. Dispositif d'éclairage et/ou signalisation de véhicule automobile selon I l'une des revendications 11 à 17, **caractérisé en ce que** le pied de glace (2) est aminci par rapport à l'épaisseur nominale de la glace.

19. Dispositif d'éclairage et/ou signalisation de véhicule automobile selon la revendication précédente, **caractérisé en ce que** le pied de glace (2) est aminci par rapport à l'épaisseur nominale de la glace, la réduction d'épaisseur étant progressive et/ou réalisée à l'aide d'une zone intermédiaire chanfreinée.
